# EUROPÄISCHE PATENTSCHRIFT

(11) **EP 4 489 891 B1**
(45) Veröffentlichungstag und Bekanntmachung des Hinweises auf die Patenterteilung: **17.12.2025**
(21) Anmeldenummer: 23705998.5
(22) Anmeldetag: 16.02.2023
(51) Int. Cl.: B01D 46/00, B01D 46/10, B01D 46/52

(54) **INNENRAUMLUFTFILTERMODUL**
INTERIOR ROOM AIR FILTER MODULE
MODULE DE FILTRE À AIR AMBIANT INTÉRIEUR

(30) Priorität: 11.03.2022 DE 102022105786
(43) Veröffentlichungstag der Anmeldung: 15.01.2025
(73) Patentinhaber: MANN+HUMMEL GmbH, 71636 Ludwigsburg (DE)
(72) Erfinder: HAYNL, Christian, 95448 Bayreuth (DE); PEKNY, Peter, 95339 Neuenmarkt (DE); KLOSS, Andreas, 68239 Mannheim (DE)
(74) Vertreter: Mann + Hummel Intellectual Property
(86) Internationale Anmeldenummer: PCT/EP2023/053891
(87) Internationale Veröffentlichungsnummer: WO 2023/169796

(56) Entgegenhaltungen:
- EP-A1- 3 520 878
- DE-A1- 102014 004 220
- US-A1- 2021 275 955

## Beschreibung

### Technisches Gebiet

Die vorliegende Erfindung betrifft ein Filterelement, insbesondere ein Innenraumluftfiltermodul zum Filtern von einer Fahrerkabine zugeführter Luft in Fahrzeugen, Landmaschinen, Baumaschinen und Arbeitsmaschinen.

Als Filtermodul oder Filtereinsatz werden im Allgemeinen als Einheit auswechselbar in einem Filtergehäuse anordenbare Einsätze verstanden, die mindestens ein Filterelement aus einem Filtermedium und üblicherweise auch eine das Filtermedium tragende oder stützende Struktur und meist eine Dichtung umfassen. Das jeweilige Filtermedium weist üblicherweise eine begrenzte Standzeit auf. Aufgrund dessen müssen Filtermodule regelmäßig als Einheit ausgetauscht werden.

Die in eine Fahrzeugkabine strömende Luft wird heutzutage möglichst vollständig von Verunreinigungen befreit. Mögliche auftretende Verunreinigungen sind beispielsweise Feinstaub, Pollen, Ruß, Schadgase oder Aerosole. Insbesondere bei Anwendungen, bei welchen hohe Konzentrationen an Pflanzenschutzmitteln oder Flüssigdüngemitteln in der Umgebungsluft bei Verwendung von Sprühgeräten für diese Stoffe auftreten, ist das Filtern derartiger Verunreinigungen wichtig. Es stehen hierfür verschiedene Filtermittel zur Verfügung. Regelmäßig werden beispielsweise Partikelfilter, Aktivkohlefilter und HEPA-Filter eingesetzt. Diese werden in verschiedenen Lagen und verschiedenen Anordnungen kombiniert, um die gewünschte Filterwirkung für die Innenraumluft zu erzielen.

### Stand der Technik

Aus EP 3 520 878 A1 ist ein Filtermodul zum Filtern von Innenraumluft mit drei Filterlagen bekannt, wobei die Filterlagen in einem gemeinsamen Rahmen angeordnet sind, welcher aus extrudierten Profilleisten zusammengesetzt ist. Eine der Filterlagen umfasst einen als Wabenkörper ausgebildeten Adsorptionsfilter, während die zwei anderen Filterlagen Partikelfilter umfassen. Die Partikelfilterlagen umfassen getrennte Filterbälge, die seriell durchströmbar sind, wobei einer der Filterbälge ein HEPA-Filtermedium umfasst. Die Profilleisten des Rahmens halten nach innen die mehreren Filterlagen, nach außen wird das Filtermodul über den Rahmen dichtend in einem Gehäuse befestigt.

Das Filtermodul der EP 3 520 878 A1 umfasst einen an den Profilleisten ausgebildeten umlaufenden Dichtflansch, der im Bereich der zwei Partikelfilterelemente nach radial außen ragt. Da es sich bei dem Wabenkörper um einen typischerweise recht massereichen Vorrichtungsbestandteil handelt ist die dort offenbarte Positionierung des Dichtflansches vor dem Hintergrund der Einwirkung einer Schwingbelastung technisch nachteilig. Nach innen einragend weisen die Profilleisten ferner zwei umlaufende Bundabschnitte auf, an denen sich jeweils zwei der Filterlagen abstützen. Diese Bauweise in Kombination mit der Ausführung der Partikelfilterlagen als getrennte Filterbälge erfordert einen vergleichsweise großen Bauraum in Axialrichtung.

Die immer intensivere Integration verschiedener Bauelemente im Maschinenbereich und der Wunsch nach längeren Filterstandzeiten führen bei der Anordnung und dem Aufbau von Innenraumluftfiltern zu Zielkonflikten. Für eine hohe Integration sind eine sehr kompakte Bauweise und ein möglichst geringes Filtervolumen von Vorteil. Längere Standzeiten hingegen bedingen in der Regel größere Filtervolumina. Ferner muss eine sichere Fixierung der Filtermodule und deren Stabilität auch bei Vibrationen und Erschütterungen im Betrieb des Fahrzeuges gewährleistet sein. Insbesondere die Beständigkeit gegen Vibrationen ist bei Filtermodulen des Standes der Technik häufig nicht sichergestellt.

Aus DE 10 2014 004 220 A1 ist ein Innenraumluftfilterelement für einen Innenraumluftfilter für die Fahrerkabine von Land- und Arbeitsmaschinen, insbesondere mit Spritz- oder Sprühvorrichtungen für Pflanzenschutz- oder Düngemittel, bekannt, umfassend einen Filterrahmen, eine Vorfilterlage, eine Adsorptionsfilterlage, eine Feinfilterlage, insbesondere zur Abscheidung von Aerosolen, wobei die Filterlagen im Wesentlichen entlang einer Strömungsrichtung durchströmt werden. Das offenbarte Innenraumluftfilterelement ist dadurch gekennzeichnet, dass der Filterelementrahmen einen ersten Bereich mit einer ersten effektiven Querschnittsfläche senkrecht zur Strömungsrichtung und einen zweiten Bereich mit einer zweiten effektiven Querschnittsfläche senkrecht zur Strömungsrichtung sowie eine umlaufende Dichtung zur Trennung der Rohseite von der Reinseite im eingebauten Zustand aufweist, wobei der erste Bereich stromaufwärts der Dichtung und der zweite Bereich stromabwärts der Dichtung angeordnet ist und die zweite effektive Querschnittsfläche nur einen Teil der ersten effektiven Querschnittsfläche beträgt.

Aus US 2021/275955 A1 ist eine Fahrzeugkabinenfilteranordnung bekannt, die ein Gehäuse und mehrere an dem Gehäuse angebrachte Filtermodule umfasst. Die Filtermodule umfassen ein erstes Filtermodul, ein zweites Filtermodul, das stromabwärts von dem ersten Filtermodul angeordnet ist, und ein drittes Filtermodul, das stromabwärts von dem zweiten Filtermodul angeordnet ist. Jedes Filtermodul umfasst ein Partikelfilterelement, und mindestens eines der Filtermodule umfasst ein Gasfilterelement. Das zweite Filtermodul hat eine höhere Abscheideleistung als das erste Filtermodul, und das dritte Filtermodul hat eine höhere Abscheideleistung als das zweite Filtermodul.

Es ist daher wünschenswert, ein bauraumreduziertes und im Fahrzeugbetrieb auch unter Vibrationseinflüssen zuverlässig arbeitendes Filtermodul zu schaffen.

### Offenbarung der Erfindung

Vor diesem Hintergrund liegt der vorliegenden Erfindung die Aufgabe zugrunde, ein verbessertes Filterelement bzw. Filtermodul zu schaffen.

Demgemäß wird ein Filtermodul, insbesondere eine Innenraumluftfiltermodul vorgeschlagen, welches umfasst:
ein Partikelfilterelement,
ein Adsorptionsfilterelement, und
einen das Partikelfilterelement und das Adsorptionsfilterelement umlaufenden Rahmen, welcher einen radial abstehenden Dichtflansch aufweist.

Dabei weist das Partikelfilterelement bevorzugt ein Faltenpack auf, welches aus mehreren Lagen eines zickzackförmig gefalteten Filtermediums gebildet ist.

Insbesondere weist mindestens eine Lage ein aerosolabscheidendes Filtermedium auf.

Das Adsorptionsfilterelement weist vorzugsweise mindestens einen zumindest Kohlenwasserstoffe adsorbierenden Formkörper auf. Der Formkörper kann darüber hinaus auch dazu ausgebildet sein, andere Schadgase zu adsorbieren, etwa NH₃ und/oder H₂S.

Der Dichtflansch ist bevorzugt derart angeordnet, dass er das Adsorptionsfilterelement an einer umlaufenden Außenwand desselben seitlich umschließt oder umläuft. Am Dichtflansch kann eine Dichtung angeordnet sein. Die Dichtung kann insbesondere an den Dichtflansch angespritzt oder als separates Teil auf den Dichtflansch aufgezogen sein. Alternativ oder zusätzlich kann die Dichtung einen ersten Abschnitt aufweisen, der an einer ersten Axialfläche des Dichtflanschs angeordnet ist, und einen zweiten Abschnitt aufweisen, der an einer zweiten Axialfläche des Dichtflanschs angeordnet ist, wobei die zweite Axialfläche des Dichtflanschs der ersten Axialfläche des Dichtflanschs abgewandt ist. Hierdurch kann im Einbauzustand des Filtermoduls sowohl eine innere Abdichtung des Rohluftbereichs gegenüber dem Reinluftbereich sowie eine externe Abdichtung gegenüber der Umgebung realisiert werden. Mit anderen Worten kann die Dichtung eine bidirektionale axiale Dichtung sein.

Eine derartige Anordnung des Dichtflanschs ist im Betrieb des erfindungsgemäßen Filtermoduls vorteilhaft, da sich der Dichtflansch dadurch - auf die Axialrichtung bezogen - möglichst nahe am Masseschwerpunkt des Filtermoduls befindet. Dies verbessert die Zuverlässigkeit des Filtermoduls, da insbesondere ein kleineres Risiko besteht, dass der Rahmen durch bei einer Vibrationsbelastung auftretende Kräfte beschädigt wird.

Insbesondere sind das Partikelfilterelement und das Adsorptionsfilterelement in dem erfindungsgemäßen Filtermodul so angeordnet, dass diese seriell durchströmbar sind. Insbesondere sind das Partikelfilterelement und das Adsorptionsfilterelement so angeordnet, dass das Partikelfilterelement stromaufwärts des Adsorptionsfilterelements angeordnet ist, sodass ein durch das erfindungsgemäße Filtermodul hindurch tretender Luftstrom zunächst das Partikelfilterelement durchströmt und danach das Adsorptionsfilterelement. Dies hat den Vorteil, dass das Adsorptionsfilterelement mit von Partikeln befreiter Luft durchströmt werden kann, was die Adsorptionsleistung des Adsorptionsfilterelements, insbesondere über die Zeit gesehen, verbessert, da Poren oder Kanäle des Adsorptionsfilterelements nicht mit Partikeln zugesetzt werden.

Das vorgeschlagene Filtermodul erlaubt eine kompakte Bauweise, die den Einsatz in bauraumeingeschränkten Anwendungen ermöglicht und aufgrund der Rahmenausgestaltung mit dem insbesondere im Bereich des Adsorptionsfilterelements vorgesehenen Dichtflansches einen zuverlässigen Einbau und eine zuverlässige Filterfunktion auch bei Vibrationen im Betrieb gewährleistet.

Dabei ist das Innenraumluftfiltermodul als ein austauschbares Bauteil für einen Innenraumluftfilter für eine Fahrerkabine von Land- und Arbeitsmaschinen, insbesondere mit Spritz- oder Sprühvorrichtungen für Pflanzenschutz oder Düngemittel geeignet und ist in ein fahrzeugfestes Filtergehäuse einbaubar.

Die jeweilige Lage des im Partikelfilterelement eingesetzten Filtermediums kann gefaltet oder wellenförmig ausgebildet sein. Als Faltungen sind beispielsweise Zickzack- oder W-Faltungen bekannt. Das Filtermedium kann geprägt und anschließend an Prägekanten unter Ausbildung von Faltkanten scharfkantig gefaltet sein. Als Ausgangsmaterial kann ein flächiger Materialfilterbogen dienen, welcher entsprechend umgeformt wird.

Das jeweilige Filtermedium ist beispielsweise ein Filtergewebe, ein Filtergelege oder ein Filtervlies. Insbesondere kann das Filtermedium in einem Spinnvlies- oder Meltblownverfahren hergestellt sein. Weiter kann das Filtermedium verfilzt oder genadelt sein. Das Filtermedium kann Naturfasern, wie Baumwolle, oder Kunstfasern, beispielsweise aus Polyester, Polyphenylsulfid oder Polytetrafluorethylen, aufweisen. Die Fasern können bei der Verarbeitung in, schräg und/oder quer zur Maschinenrichtung orientiert sein.

Es kann ferner ein Adsorptionsmittel, wie etwa Aktivkohle, in oder zwischen den Lagen aufweisen. Weiterhin kann das Filtermedium eine antimikrobielle und/oder antiallergene Wirkung aufweisen. Als antimikrobieller Stoff kommt beispielsweise Zink-Pyrithion oder Nanosilber, als antiallergener Stoff beispielsweise Polyphenol in Betracht.

Ein entsprechendes Filtermodul dient der Filterung von Fluiden, also gasförmigen und/oder flüssigen Medien, beispielsweise Luft. Ein gasförmiges Medium bzw. Luft umfasst hier auch Gas- bzw. Luft-Feststoffgemische und/oder Gas- bzw. Luft-Flüssigkeitsgemische. Beispielsweise kann eine Klimaanlage das Filterelement aufweisen.

Ein insbesondere offenes Filtermedium kann dazu eingerichtet sein, Partikel des Teststaubs A4 nach ISO 12103-1 aus einem Luftstrom mit einer Filtrationsgeschwindigkeit von 0,05 bis 0,30 m/s, bezogen auf die Filtermedienfläche, bei einer Luftdurchlässigkeit von größer 3000 l/m²s (bestimmt gemäß ISO 9237 bei 200 Pa) zu entfernen. Die Ermittlung der Filtrationskennwerte kann beispielsweise gemäß DIN 14269-4 erfolgen.

Ein insbesondere hochabscheidendes Filtermedium kann dazu eingerichtet sein, Partikel des Teststaubs A2 nach ISO 12103-1 sowie NaCI-Aerosolpartikel gemäß DIN 71460-1 aus einem Luftstrom mit einer Filtrationsgeschwindigkeit von 0,05 bis 0,30 m/s, bezogen auf die Filtermedienfläche, bei einer Luftdurchlässigkeit von größer 170 l/m²s (bestimmt gemäß ISO 9237 bei 200 Pa) zu entfernen. Die Ermittlung der Filtrationskennwerte kann beispielsweise gemäß DIN 14269-4 erfolgen.

In Ausführungsformen umfasst eine der mehreren Lagen des Partikelfilterelements ein aerosolabscheidendes Partikelfiltermedium der Filtrationsklasse H13 oder H14 nach DIN EN 1822-1. In anderen Worten kann es sich bei zumindest einer der Lagen des Partikelfilterelements um ein HEPA-Filtermedium handeln. Denkbar ist der Einsatz eines Vliesmaterials aus Kunststoff oder Glasfaser. In Ausführungsformen ist eine aerosolfilternde Lage strömungsabwärts aus einem HEPA-Aerosolmedium aus ePTFE gefertigt.

Das Partikelfilterelement umfasst anströmseitig eine erste Lage und abströmseitig eine zweite Lage, wobei die Lagen zum Ausbilden des Faltenpacks aneinander liegend miteinander gefaltet sind, insbesondere sind die erste Lage und die zweite Lage lose aneinander anliegend miteinander gefaltet bzw. koplissiert. Unter "aneinander anliegend" wird hierin nicht nur ein unmittelbares Anliegen verstanden, sondern auch ein mittelbares Anliegen unter Zwischenschaltung von weiteren Strukturen, z.B. Klebstoffschichten oder -spuren.

Die erste Lage kann anströmseitig weitestgehend Staubpartikel zurückhalten, während die zweite abströmseitige Lage als Aerosolmedium ausgestaltet sein kann. Ein Zusetzen der Aerosollage mit Partikeln wird dadurch reduziert.

Als erste Lage, die als Vorfilterlage bezeichnet werden kann, kommt beispielsweise ein Zellulose-Filtermedium mit Epoxidimprägnierung zum Einsatz. Bevorzugt weist das Zellulose-Filtermedium ein Flächengewicht von 80 - 140 g/m², bevorzugt 100 - 120 g/m² auf. In einer bevorzugten Ausführungsform weist das Medium eine maximale Porengröße im Bereich von 30 - 40 µm und/oder eine Luftdurchlässigkeit von ca. 100 - 400 l/m²s, bevorzugt zwischen 200 und 300 l/m²s auf, jeweils gemessen bei einer Druckdifferenz von 200 Pa (gemessen hier und im Folgenden bevorzugt nach DIN EN ISO 9237). Auf diese Weise können die nachfolgenden Lagen vor Staubablagerung geschützt und damit deren Funktion gesichert werden. In einer Ausführung beträgt der Imprägniergehalt, d.h. der Gewichtsanteil des Imprägniermittels am Flächengewicht des Filtermediums zwischen 15 und 30%.

Als Vlies-Filtermedium für die Vorfilterlage kann bevorzugt eine Kombination einer Spinnvlieslage und einer Meltblown-Lage (Vlies aus schmelzgeblasenen Kunststofffasern) verwendet werden. Beide Lagen können jeweils aus Polyamid (PA), Polyester (PES) oder Polypropylen (PP) hergestellt sein. Das Vlies-Filtermedium weist bevorzugt ein Flächengewicht zwischen 60 und 140 g/m², bevorzugt zwischen 80 und 120 g/m² und/oder eine Dicke im Bereich von 0,5 - 1 mm, besonders bevorzugt von 0,5 - 0,8 mm auf. Weiter bevorzugt liegt die Luftdurchlässigkeit im Bereich von 1000 - 2000 l/m²s, besonders bevorzugt zwischen 1200 und 1800 l/m²s bei einer Druckdifferenz von 200 Pa.

In einer Ausführungsform weist die Vorfilterlage insbesondere nach ISO 5011 einen Abscheidegrad von 99% für Prüfstaub A2 oder A4 nach ISO 12103-1 auf.

Die Vorfilterlage weist in einer bevorzugten Ausführungsform eine Flächenmasse von 75 - 125 g/m² auf. Bevorzugt weist das Filtermedium der Vorfilterlage eine Luftdurchlässigkeit von 100 - 200 l/m²s bei einer Druckdifferenz von 200 Pa auf.

Die zweite Lage, die als Feinfilterlage bezeichnet werden kann, kann als eine HEPA-Balglage ausgestaltet sein. In einer Ausführungsform wird als Feinfilterlage ein zunächst ungefaltetes Filtermedium mit Glasfasern in einer Glasfaserlage verwendet. Hierbei kann beispielsweise ein Glasfaservlies oder Glasfaserpapier verwendet werden. Dieses weist bevorzugt eine einseitig oder beidseitig kaschierte Deckschicht aus einem Spinnvlies auf. Dadurch wird insbesondere ein mechanischer Schutz des oft sehr empfindlichen Glasfasermediums erreicht. Dies ist insbesondere von Vorteil, wenn die Glasfaserlage gefaltet wird, da hierdurch insbesondere das Medium vor Beschädigungen beim Falten geschützt werden kann, welche zu lokalen Undichtigkeiten oder zu Rissen führen könnten. Ferner können derartige Deckschichten zur Verbesserung der mechanischen Festigkeit der Feinfilterlage dienen.

In einer Ausführungsform der Feinfilterlage weisen die Glasfasern einen Faserdurchmesser im Bereich von 800 nm bis 5 µm auf. Bevorzugt weisen 90 % der Fasern einen Faserdurchmesser innerhalb dieses Bereichs auf. Bevorzugt liegen Fasern mit Faserdurchmessern im Wesentlichen im ganzen Faserdurchmesserbereich vor. Bevorzugt liegt der mittlere Faserdurchmesser innerhalb des genannten Bereichs. Die Faserdurchmesser können beispielsweise nach den in DE 10 2009 043 273 A1 oder US 2011/0235867 A1 beschriebenen Verfahren gemessen sein. Bevorzugt weist das Filtermedium der Feinfilterlage eine Flächenmasse zwischen 60 und 100 g/m2 auf, besonders bevorzugt zwischen 75 und 90 g/m2. Die Glasfaserlage weist bevorzugt eine Dicke von 0,2 - 1 mm, besonders bevorzugt von 0,3 - 0,6 mm auf. Besonders bevorzugt wird eine Glasfaserlage verwendet, welche bei einer Anströmgeschwindigkeit von 7,5 cm/s einen Widerstand im Bereich von 300 - 600 Pa, bevorzugt zwischen 400 und 500 Pa erzeugt. Die Luftdurchlässigkeit (Permeabiliät) liegt bevorzugt im Bereich von 25 bis 45 l/m2s bei einem Druckverlust von 200 Pa. Der Druckverlust liegt bei einer Strömungsgeschwindigkeit von 5,3 cm/s bevorzugt im Bereich von 200 - 700 Pa, besonders bevorzugt zwischen 450 und 600 Pa oder alternativ zwischen 270 - 480 Pa. Die Porengröße kann bevorzugt im Bereich zwischen 5 und 12 µm, besonders bevorzugt zwischen 8 und 10 µm liegen.

Anstatt von Glasfasern können für die Feinfilterlage auch Kunststofffasern verwendet werden. In einem Ausführungsbeispiel wird ein solches synthetisches HEPA-Medium an Stelle der beschriebenen Glasfasermedien verwendet. Als Werkstoff kann dabei beispielsweise Polyester oder Polypropylen oder Polyamid verwendet werden, die Faserlagen sind dabei bevorzugt in Vliesform ausgebildet und beispielsweise im Elektrospinningverfahren, im Schmelzblasverfahren oder auf sonstige Weise hergestellt. Bevorzugt wird dabei ein Elektretmedium verwendet. Aufgrund der Stoffeigenschaften synthetischer Filtermedien kann vorteilhaft auf Deck und Schutzlagen verzichtet werden. Bevorzugt wird eine Lage aus schmelzgeblasenem Vlies aus Polyester mit einer Flächenmasse von beispielsweise 80 - 160 g/m2, bevorzugt zwischen 80 und 120 g/m2 und einer Dicke von beispielsweise ca. 0,4 bis 1 mm verwendet. Diese ist weiter bevorzugt auf eine Trägerlage aufgebracht. Als Trägerlage kommt beispielsweise ein Kunststoff-Stützgitter oder eine Spinnvlieslage in Betracht. Die weiteren Eigenschaften können denen der beschriebenen Feinfilterlagen mit Glasfasern entsprechen.

Das Partikelfilterelement hat insbesondere eine Aerosol-Durchdringung von ≤ 0,05% gemessen nach EN 15695.

Diese integrierte Bauweise einer Vorfilterlage und einer Feinfilterlage innerhalb des Partikelfilterelements bietet gegenüber dem Stand der Technik den Vorteil, dass der erforderliche Bauraum in Axialrichtung bei wesentlicher Beibehaltung der Filtrationsleistung deutlich reduziert werden kann. Gegenüber einer Ausführung, die für Vorfilterlage und Feinfilterlage getrennte Filterbälge einsetzt, beträgt der axiale Bauraumvorteil bis zu 50%.

Das Partikelfilterelement umfasst in Ausführungsformen einen das Faltenpack umschließenden Rahmen, welcher auf Faltprofile des gefalteten Filtermediums angebrachte Seitenbänder und an Endfalten des Faltenpacks angebrachte Kopfbänder umfasst.

Die Seitenbänder sind insbesondere mit den Faltprofilen dichtend verklebt, und die Kopfbänder bilden ebenfalls einen dichten Abschluss.

Ein Faltenabstand des Faltenpacks liegt beispielsweise zwischen 3 und 5 mm und eine Faltenhöhe zwischen 16 und 30 mm. Es können in Ausführungsformen von 100 bis 150 Faltungen vorliegen.

Der Rahmen ist in Ausführungsformen aus einem Kunststoffmaterial, insbesondere einem Hartkunststoffmaterial, gefertigt, wobei die Teilfilterelemente (Partikelfilterelement und Adsorptionsfilterelement) zur Bildung des Innenraumfiltermoduls insbesondere unmittelbar aufeinander liegen und mittels des Rahmens miteinander dichtend verbunden sind.

Insbesondere kann der Rahmen als ein spritzgegossener Kunststoffrahmen vorgesehen sein. Dieser kann entweder vorgefertigt sein und die Teilfilterelemente aufnehmen, die im Rahmen verklebt oder verschweißt werden. Alternativ kann der Rahmen als umspritzter Rahmen ausgebildet sein, der dadurch gebildet wird, dass die Teilfilterelemente in eine Form eingelegt und anschließend mit einem Spritzgussrahmen umspritzt werden, wobei das jeweilige Material sich beim Aushärten unlösbar mit den Teilfilterelementen verbindet.

Denkbar ist ferner, dass der Rahmen durch eine Vergussmasse aus Polyurethan (PUR) oder einem anderen gießfähigen Polymer gebildet ist, insbesondere aus einem aufgeschäumten Polyurethan, d.h. Polyurethanschaum.

In Ausführungsformen umfasst das Innenraumfiltermodul ferner einen Hilfsrahmen, welcher das Partikelfilterelement und das Adsorptionsfilterelement zumindest teilweise seitlich umschließt und miteinander befestigt. Dadurch kann die Fertigung des Innenraumfiltermoduls durch eine verbesserte Handhabbarkeit der Halbfertigteile oder Komponenten des Filtermoduls vereinfacht werden. Der Hilfsrahmen kann mit dem Rahmen verbunden sein, insbesondere verklebt oder verschäumt. Alternativ oder zusätzlich können das Partikelfilterelement und das Adsorptionsfilterelement mit dem Hilfsrahmen verklebt sein.

Der Hilfsrahmen kann das Partikelfilterelement und das Adsorptionsfilterelement insbesondere vollumfänglich umlaufen. Der Hilfsrahmen kann insbesondere ein Vliesmaterial aufweisen oder daraus bestehen. Das Vliesmaterial des Hilfsrahmens kann insbesondere eine größere Dicke aufweisen als das Filtermedium des Partikelfilterelements. Alternativ oder zusätzlich kann das Vliesmaterial des Hilfsrahmens eine höhere Biegesteifigkeit aufweisen als das Filtermedium des Partikelfilterelements.

In Ausführungsformen des Innenraumfiltermoduls ist ferner abströmseitig des Adsorptionsfilterelements eine Zwischenfilterlage angeordnet. Die Zwischenfilterlage ist insbesondere als abströmseitig letzte Filterstufe des erfindungsgemäßen Filtermoduls ausgebildet. Ein Herausrieseln von beispielsweise partikelförmigem Adsorbermaterial nach ungünstiger mechanischer/ abrasiver Krafteinwirkung kann somit verhindert werden. Dies ist wichtig, um zu verhindern, dass Adsorbermaterial aus dem Wabenkörper auf eine Reinseite und somit im Betrieb in einen Innenraum gelangt. Ferner wird durch die Zwischenfilterlage verhindert, dass Adsorbermaterial aus dem Adsorptionsfilterelement "verlorengeht", sodass sichergestellt wird, dass die Adsorptionskapazität des Filtermoduls über dessen geplante Lebensdauer aufrecht erhalten bleibt.

Das Adsorptionsfilterelement umfasst in Ausführungsformen mehrere Formkörper, welche miteinander verbunden sind, insbesondere mithilfe einer aushärtbaren Vergussmasse.

Als Formkörper kommen Wabenkörper infrage, insbesondere wie sie in EP 2 946 827 A1, auf welche hier vollinhaltlich Bezug genommen wird ("incorporation by reference"), beschrieben sind.

Der mindestens eine Formkörper ist in Ausführungsformen zumindest teilweise aus einem Keramikmaterial, Aktivkohlematerial, Ionenaustauschermaterial, Molekularsiebmaterial, Zeolithmaterial, metallorganischen Gerüstmaterial, und/oder Metallmaterial gefertigt.

Insofern kommen als Materialien des Formkörpers insbesondere die in den Absätzen [0006] bis [0012] der EP 2 946 827 A1 benannten Materialien in Frage. Die Form und innere Geometrie des Formkörpers ist, insbesondere wie für die Wabenkörper der EP 2 946 827 A1 beschrieben, ausgeführt (vgl. beispielsweise Absätze [0014] - [0031] der EP 2 946 827 A1).

Der Einsatz eines Wabenkörpers als Adsorptionsfilterelement weist gegenüber bekannten Ausführungen von Adsorptionsfilterelementen, etwa gefaltete, gestapelte oder gewickelte Lagen von mit Adsorbenzien versehenen Filtermedien (so genannte Kombifiltermedien) oder Schüttungen, den Vorteil eines signifikant niedrigeren Durchströmungswiderstands auf. Darüber hinaus lässt sich mit einem Wabenkörper eine sehr hohes Adsorptionsvermögen bereitstellen, sodass ein solcher Wabenkörper deutlich länger einsetzbar ist, bis es zu einem Gasdurchbruch kommt.

Der Wabenkörper ist insbesondere als Extrusionskörper ausgebildet, der strukturell Kanäle und dazwischen angeordnete Wandungen aufweist. Die Kanäle durchsetzen den Wabenkörper und sind insbesondere beidseitig offen, sodass zwischen einer Anströmseite und einer Abströmseite die zu filternde Luft hindurchströmen kann. Der hierbei entstehende Druckverlust resultiert in erster Linie aus Reibungseffekten der Luft mit den Kanalwandungen - ein Sperreffekt wie bei "klassischen" Filtermedien tritt nicht auf.

Insofern ist bereits der Einsatz eines Wabenkörpers überraschend und für den Fachmann nicht mit alternativen Adsorptionsfilterkonzepten zu vergleichen, insbesondere nicht mit gefalteten, gestapelten oder gewickelten Lagen von Kombifiltermedien.

Die Wandstärke der Kanalwände des Wabenkörpers kann in Ausführungen zwischen 200 Mikrometer und 400 Mikrometer liegen. Derartige Kanalabmessungen sind vorteilhaft, um einen Wabenkörper mit einer hohen Anzahl von Kanälen und damit eine große Kontaktfläche mit der zu filtrierenden Luft zu erzielen.

Die Anzahl der Kanäle im Wabenkörper kann zwischen 40 und 100 Kanälen pro Quadratzentimeter liegen. Diese Kanaldichte hat sich als vorteilhaft erwiesen, um einen geringen Druckverlust bei hoher Adsorptionsleistung zu erreichen.

Der Wabenkörper kann aus Aktivkohle gefertigt sein oder Aktivkohle aufweisen. Die Aktivkohle kann in Form einer Paste oder als Teil einer Paste, die neben Aktivkohlepartikeln zumindest ein geeignetes Bindermaterial aufweist, leicht zu einem Wabenkörper extrudiert werden. Der Anteil an Aktivkohle am Wabenkörper kann beispielsweise zwischen 50 und 80 Gewichtsprozent liegen. Das pastöse Ausgangsmaterial wird in der Herstellung des Wabenkörpers nach dem Extrudieren zunächst einem oder mehreren Trocknungsschritten unterworfen und anschließend unter hoher Temperatur gesintert. Hierbei werden in der Paste enthaltene Binder pyrolysiert und es verbleibt eine poröse Struktur aus Aktivkohle. Die o.g. Zusammensetzung der Paste hat sich als vorteilhaft erwiesen, um einerseits eine ausreichende Menge an Aktivkohle in den Wabenkörper einbringen zu können und um andererseits die mechanische Stabilität des Wabenkörpers sicherzustellen.

Der Wabenkörper kann in Ausführungen mit einer Imprägnierung versehen sein, die die Abscheidung von Schadgasen, die keine Kohlenwasserstoffe sind, verbessert. Insbesondere kann über die Imprägnierung die Abscheidung von NH₃ und/oder H₂S verbessert werden.

In Ausführungsformen ist das Partikelfilterelement, das Adsorptionsfilterelement, der Formkörper und/oder das Innenraumluftfiltermodul selbst jeweils quaderförmig ausgebildet. Quaderförmige Komponenten lassen sich günstig zu dem Filtermodul zusammensetzen und erlauben eine effiziente Bauraumnutzung.

Ferner können sich, insbesondere bei quaderförmigen Außenmaßen, auf bestimmte Ebenen durch das Filtermodul bezogene Spiegelsymmetrien ergeben, die eine günstige Massenverteilung des Filtermoduls erlauben. Es hat sich als günstig erwiesen, einen Schwerpunkt des Filtermoduls relativ zur Befestigung oder Halterung an einem Filtergehäuse so einzustellen, dass Vibrationen oder Bewegungen des Fahrzeugs nur reduziert zu mechanischen Belastungen führen.

In Ausführungsformen definiert der Dichtflansch eine Dichtungsebene, und der Dichtflansch ist derart angeordnet, dass die Dichtungsebene durch das Innere des Formkörpers verläuft.

Beispielsweise umläuft der abstehende Dichtungsflansch als abstehende flache Auskragung die umlaufenden Seitenteile des Rahmens, um zwischen entsprechenden Dichtflächen eines Gehäuses, optional unter Einsatz einer oder mehrerer Dichtungen, die einer Flanschkontur folgen, gehalten zu werden und einen Rohluft- von einem Reinluftbereich trennen.

Als Dichtungsebene kann eine Raumebene verstanden werden, in der der Dichtungsflansch oder die zusätzliche Dichtung im Montagezustand liegen. Eine solche (fiktive) Ebene trennt das Filtermodul in einen ersten und einen zweiten Teil. Jeder der beiden Teile schließt dann einen Massenanteil ein, und die Summe der beiden Massenanteile addiert sich zu der Gesamtmasse des Filtermoduls.

Daher kann in Ausführungsformen der Dichtflansch eine entsprechende Dichtungsebene definieren, welche das Innenraumluftfiltermodul in eine erste und zweite Hälfte trennt, wobei der Dichtflansch derart angeordnet ist, dass ein Verhältnis zwischen einer Masse der ersten Hälfte des Innenraumluftfiltermoduls und einer Masse der zweiten Hälfte des Innenraumluftfiltermoduls einen vorgegebenen Wert hat. Der Wert ist beispielsweise zwischen 0,5 und 1,5, vorzugsweise zwischen 0,6 und 1,4, besonders bevorzugt zwischen 0,8 und 1,2. Noch bevorzugter ist der Wert zwischen 0,9 und 1,1. Bei einer Ausführungsform mit einem Wert von 1,0 liegt der Massenschwerpunkt des Innenraumluftfiltermoduls in der Dichtungsebene.

Man spricht von einer axialen Richtung und radialen Richtung des Filtermoduls, wobei unter "axial" in Durchströmungsrichtung, also senkrecht zu einer Anströmfläche oder -Seite des beispielsweise quaderförmigen Filtermoduls, verstanden wird. Unter "radial" wird insbesondere eine Normalrichtung einer Seitenfläche oder -Wand des Rahmens oder einer seitlichen Fläche des, insbesondere quaderförmigen, Filterelements verstanden.

Neben dem Filtermodul wird eine Filteranordnung mit einem Filtergehäuse zur Aufnahme zumindest eines Filtermoduls wie es zuvor oder im Folgenden beschrieben ist, vorgeschlagen, wobei das Filtergehäuse einen ersten und zweiten der Kontur des Dichtflansches und/oder der Dichtung folgenden Dichtabschnitt umfasst.

Der Dichtflansch und/oder die Dichtung ist in Ausführungsformen zwischen zwei Gehäuseteilen axial verpresst, wenn das Filtermodul bestimmungsgemäß in dem Filtergehäuse angeordnet ist.

Die Filteranordnung ist vorzugsweise für eine Filterung gemäß Kategorie 4 nach DIN EN 15695-1 eingerichtet. Es wird daher insbesondere eine Anwendung des Filtermoduls als Innenraumluftfilter für eine Fahrerkabine von Land- und Arbeitsmaschinen, wie Traktoren, Mähdrescher oder Erntemaschinen, insbesondere mit Spritz- oder Sprühvorrichtungen für Pflanzenschutz oder Düngemittel, vorgeschlagen.

Die zuvor und im Folgenden benannten Normen und Standards sind zum Zeitpunkt des Anmeldetages dieser Anmeldung zu verstehen.

Weitere mögliche Implementierungen der Erfindung umfassen auch nicht explizit genannte Kombinationen von zuvor oder im Folgenden bezüglich der Ausführungsbeispiele beschriebenen Merkmale. Dabei wird der Fachmann auch Einzelaspekte als Verbesserungen oder Ergänzungen zu der jeweiligen Grundform der Erfindung hinzufügen.

Weitere Ausgestaltungen der Erfindung sind Gegenstand der Unteransprüche sowie der im Folgenden beschriebenen Ausführungsbeispiele der Erfindung. Im Weiteren wird die Erfindung anhand von Ausführungsbeispielen unter Bezugnahme auf die beigelegten Figuren näher erläutert.

### Kurze Beschreibung der Zeichnungen

Es zeigt dabei:
Fig. 1: eine teilweise Längsschnittansicht einer Ausführungsform eines Innenraumluftfiltermoduls;
Fig. 2: eine Querschnittansicht der Ausführungsform eines Innenraumluftfiltermoduls;
Fig. 3: eine perspektivische Explosionsdarstellung des Innenraumluftfiltermoduls aus Fig. 1 und 2;
Fig.4: eine perspektivische und angeschnittene Darstellung einer Ausführungsform einer Filteranordnung mit einem Innenraumluftfiltermodul aus Fig. 1 - 3; und
Fig. 5: eine Querschnittansicht der Filteranordnung aus Fig. 4.

In den Figuren sind gleiche oder funktionsgleiche Elemente, sofern nichts anderes angegeben ist, mit denselben Bezugszeichen versehen worden.

### Ausführungsform(en) der Erfindung

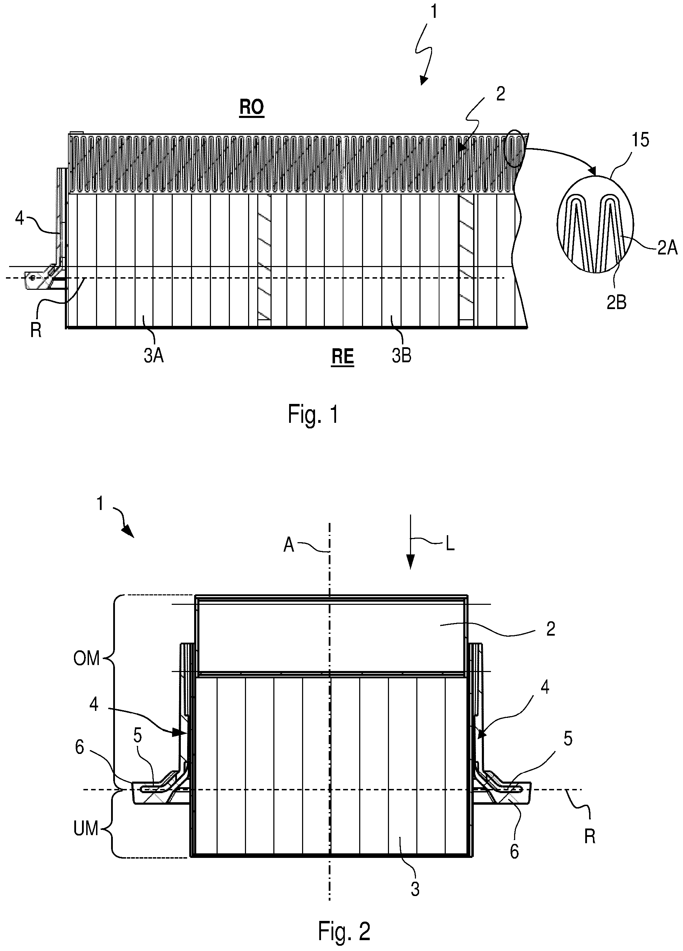

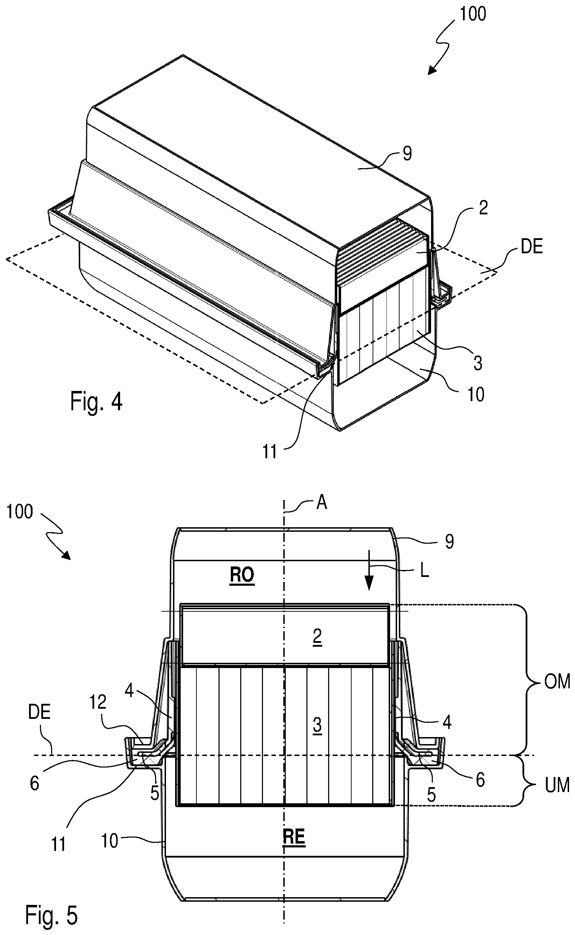

Im Folgenden wird eine Ausführungsform eines Filtermoduls als Innenraumfiltermodul für die Zuluft einer Fahrerkabine eines Landfahrzeugs und dessen Einsatz in einer entsprechenden Filteranordnung beschrieben. Das Innenraumluftfiltermodul ist in Fig. 1-3 in verschiedenen Ansichten dargestellt, und Fig 4. und 5 zeigen das Innenraumluftfiltermodul in einem Filtergehäuse als Filteranordnung, um einen Innenraumfilter der Kategorie 4 der europäischen Norm DIN EN 15695 auszubilden. Neben Staub sind es dabei vor allem Aerosole und gasförmige Verunreinigungen in der Luft, die zum Schutz der Fahrer nicht in die Fahrerkabine gelangen sollen.

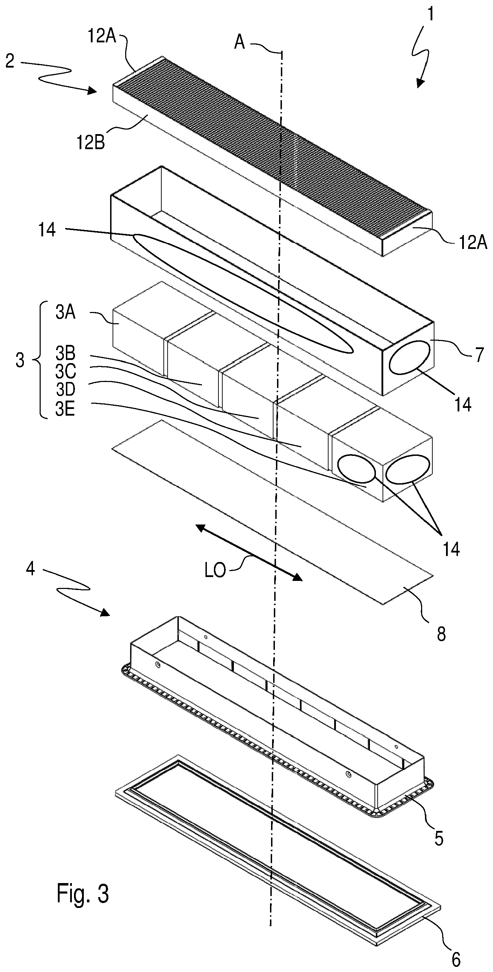

Das Innenraumfiltermodul 1 umfasst in Durchströmrichtung L (vgl. in der Orientierung der Fig. 3 von oben nach unten) ein Partikelfilterelement 2, welches einer Filterklasse H13 oder H14 nach DIN EN 1822 entspricht. Es handelt sich somit um einen HEPA-Filter (Schwebstofffilter, bzw. High Efficiency Particulate Air), der nur eventuelle gasförmige Luftverunreinigungen durchlässt. Das Partikelfilterelement 2 besteht aus einem Faltenpack, das aus einem zickzackförmig gefalteten zweilagigen flächigen Filtermedium gebildet ist und einem umlaufenden Rand, der aus zwei Kopfbändern 12A und zwei Seitenbändern 12B gebildet ist. Es ergibt sich eine flache quaderförmige Geometrie des Partikelfilterelements 2.

Das Faltenpack oder der Faltenbalg ist in Fig. 1 teilvergrößert gezeigt. Eine erste Lage 2A (Vorfilterlage) und eine zweite Lage 2B (Feinfilterlage) des Filtermediums 15 sind bei der Herstellung zunächst lose aufeinander gelegt und werden dann gemeinsam zickzackförmig gefaltet. Um die Faltprofile aufrechtzuerhalten, werden die Seitenbänder 12B angeklebt. An den Endfalten wird jeweils ein Kopfband 12A angebracht, sodass sich ein handhabbares Teilfilterelement 2 ergibt. Die Vorfilterlage 2A ist aus einem synthetischen Kunststoffvlies, wie PET, PP oder PC, gebildet. Die Feinfilterlage 2B ist aus einem ePTFE-Material gebildet. Es ergibt sich eine Luftdurchlässigkeit des Medienverbundes der Lagen 2A, 2B von etwa 87 l/m²s. Die Fig. 1 zeigt dabei einen Teillängsschnitt entlang der in Fig. 3 erkennbaren Längenrichtung des stabförmigen Quaders des Innenraumfiltermoduls 1 und Fig. 2 einen Querschnitt senkrecht zur Längsrichtung LO.

Dem Partikelfilterelement 2 strömungsabwärts folgt ein aus Wabenkörpern 3A - 3E gebildetes Adsorptionsfilterelement 3. Die quaderförmigen Wabenkörper 3A - 3E sind aneinander durch eine Vergussmasse dicht befestigt. Die vorgereinigte Luft durchströmt im Betrieb des Innenraumfiltermoduls 1 das zumindest Kohlenwasserstoffe adsorbierende Material des jeweiligen Wabenkörpers 3A - 3E. Beispielsweise kommen Wabenkörper 3A - 3E zum Einsatz, wie sie in der EP 2 946 827 A1 beschrieben sind.

Das Partikelfilterelement 2 und das Adsorptionsfilterelement 3 werden mit Hilfe eines vierseitigen Hilfsrahmens 7 aneinander gehalten. Die Unterseite des Partikelfilterelement 2 und die Oberseite des Adsorptionsfilterelements 3 liegen dabei aneinander, und der aus einem Vlies- oder Seitenbandmaterial gefertigte Hilfsrahmen 7, der seitlich sowohl an die Seiten- und Kopfbändern 12B, 12A wie auch an den äußeren Seitenflächen (vgl. Markierungen 14 in Fig. 3) der Wabenkörper 3A - 3E befestigt ist, hält die beiden Teilfilterelemente 2, 3 zusammen.

Auf die Unterseite des Adsorptionsfilterelements 3 ist eine flache Zwischenfilterlage 8 aus einem Vliesmaterial angebracht, um beispielsweise ein Herausrieseln von Absorptionspartikeln aus dem Adsorptionsfilterelements 3 zu verhindern. Die Zwischenfilterlage umfasst insbesondere ein Vliesmaterial, wobei das Vliesmaterial insbesondere eine höhere Luftdurchlässigkeit aufweist als das Filtermedium des Partikelfilterelements. Die Zwischenfilterlage 8 ist insbesondere eine planare Lage und insbesondere ungefaltet.

Der Hilfsrahmen 7 und die Zwischenfilterlage 8 erhöhen ferner die Stabilität und damit die Handhabbarkeit des Innenraumfiltermoduls 1. Darüber hinaus ist das Filtermodul 1 dadurch widerstandsfähiger gegenüber Beschleunigungen, wie Vibrationen, Rütteln, oder Erschütterungen.

Die quaderförmige Einheit aus den miteinander über den Hilfsrahmen 7 verbundenen und nach unten mit der Zwischenfilterlage 8 abgeschlossenen Teilfilterelementen 2, 3 ist seitlich von einem Kunststoffrahmen 4 umschlossen, der einen radial abstehenden Dichtsteg oder Dichtflansch 5 aufweist. In den Figuren ist eine axiale Richtung A gestrichpunktet angedeutet und eine radiale Richtung R gestrichelt dargestellt. In einem in einem Gehäuse eingesetzten Zustand ist der Dichtsteg 5 zwischen zwei korrespondierenden Gehäuseteilen 9, 10 über eine Dichtung 6 axial eingespannt (vgl. Fig. 5).

Bei der in Fig. 4 und 5 gezeigten Filteranordnung 100 ist das Filtergehäuse aus einem Gehäuseoberteil 9 und einem Gehäuseunterteil 10 gebildet. Das Gehäuseunterteil 10 hat einen U-Profilförmige seitlich nach außen abstehenden Aufnahmesteg 11 für die Dichtung 6 des Innenraumfiltermoduls 1. Das Gehäuseoberteil 9 hat einen dazu korrespondierenden Profilsteg 12, der die um den Dichtflansch 5 angeordnete Dichtung 6 axial gegen den Aufnahmesteg 11 drückt und damit eine luftdichte Abdichtung schafft.

Innerhalb der Filteranordnung 100 liegt damit ein Rohluftbereich RO und ein Reinluftbereich RE vor. Die zu filternde potenziell mit Staub und Gasen beladene Luft tritt durch einen nicht gezeigten Einlass in den Rohluftbereich RO ein, wird aufgrund einer Druckdifferenz durch die beiden Teilfilterelemente 2, 3 getrieben und sammelt sich als gereinigte Luft für den Fahrzeugkabineninnenraum im Reinluftbereich RE an. Aus dem Reinluftbereich RE wird die saubere Luft durch einen nicht dargestellten Auslass der Fahrzeugkabine zugeleitet.

Der Dichtungsflansch 5 und die Dichtung 6, sowie die Gehäuseabschnitte 11,12 haben eine rechteckige Form. Man kann von einer Dichtungsebene DE sprechen, die, wie es in Fig. 4 illustriert ist, den Innenraum des Gehäuses 9, 10 und das innere Volumen des quaderförmigen Adsorptionsfilterelements 3 durchsetzt. Die Dichtungsebene DE entspricht in Fig. 1 und 2 der eingezeichneten radialen Richtung R.

Um ein bezüglich der Halterung des Innenraumfiltermoduls 1 über den Dichtsteg 5/die Dichtung 6 an den Gehäuseteilen 9, 10 ausgewogenes Massenverhältnis zu erzielen, verläuft die Dichtungsebene DE in diesem Ausführungsbeispiel durch den Massenschwerpunkt des Innenraumfiltermoduls 1. Genauer, teilt die durch die Positionierung des Dichtungsflanschs 5 definierte Dichtungsebene DE die Gesamtmasse des Innenraumfiltermoduls 1 in eine obere Hälfte OM und eine untere Hälfte UM. Das Innenraumfiltermodul 1 ist in dem Gehäuse 9, 10 insbesondere dann besonders stabil gegenüber Beschleunigungen befestigt, wenn die Masse der ersten Hälfte OM des Innenraumluftfiltermoduls 1) und die Masse der zweiten Hälfte UM des Innenraumluftfiltermoduls 1 gleich sind.

Bei ungleich verteilten Masseanteilen des Innenraumluftfiltermoduls 1 bezüglich der Dichtungsebene DE besteht ein höheres Risiko für beschleunigungsverursachte Verspannungen als im vorgeschlagenen "Gleichgewichtszustand". Man kann sagen, dass der obere Teil bzw. die obere Hälfte OM des Innenraumluftfiltermoduls 1 in etwa genauso schwer ist, wie der untere Teil bzw. die untere Hälfte UM des Innenraumluftfiltermoduls 1, wenn man die durch den Dichtungsflansch aufgespannte Ebene als Trennebene (Dichtungsebene DE) betrachtet. Dabei können gewisse Toleranzen bezüglich der Massenverhältnisse eingeräumt werden.

Bei der vorliegenden Ausführungsform umschließt der Dichtflansch 5 das Adsorptionsfilterelement 3 bzw. liegt einer jeweiligen Seite 14 des Formkörpers 3A- 3E oder des Hilfsrahmens 7 auf der Höhe der Wabenkörper 3A - 3E des Adsorptionsfilterelements 3 gegenüber. In Abhängigkeit von der axialen Massenverteilung des Verbundes aus Teilfilterelementen 2, 3 kann der Dichtflansch 5 auch in einer abweichenden axialen Höhe des Filterelementverbundes positioniert werden.

Insgesamt wird insofern ein zuverlässiges Filtermodul mit effizient eingesetzten Filtermedien geschaffen, dass aufgrund seiner seitlichen äußeren Halterung in einem Gehäuse gegenüber Erschütterungen besonders robust ist.

### Bezugszeichen

- 1: Innenraumluftfiltermodul
- 2: Partikelfilterelement
- 2A: Vorfilterlage
- 2B: HEPA-Lage
- 3: Adsorptionsfilterelement
- 3A - 3E: Formkörper
- 4: Rahmen
- 5: Dichtflansch
- 6: Dichtung
- 7: Hilfsrahmen
- 8: Zwischenfilterlage
- 9, 10: Gehäuseteil
- 11: Dichtungsaufnahmeabschnitt
- 12A: Kopfband
- 12B: Seitenband
- 13: Dichtabschnitt
- 14: umlaufende Wand des Adsorptionsfilterelements
- 15: Filtermedium

- 100: Filteranordnung

- A: Axialrichtung
- DE: Dichtungsebene
- R: Radialrichtung
- L: Durchströmrichtung
- LO: Längsrichtung
- OM: obere Masse
- UM: untere Masse
- RE: Reinseite
- RO: Rohseite

## Patentansprüche

1. Innenraumluftfiltermodul (1) mit einem Partikelfilterelement (2), einem Adsorptionsfilterelement (3), einem das Partikelfilterelement (2) und das Adsorptionsfilterelement (3) umlaufenden Rahmen (4), welcher einen radial abstehenden Dichtflansch (5) umfasst, wobei das Partikelfilterelement (2) ein Faltenpack, welches aus mehreren Lagen eines zickzackförmig gefalteten Filtermediums (15) gebildet ist und mindestens eine Lage (2B) ein aerosolabscheidendes Filtermedium aufweist,
wobei das Partikelfilterelement (2) anströmseitig eine erste Lage (2A) und abströmseitig eine zweite Lage (2B) umfasst, welche zum Ausbilden des Faltenpacks aneinander liegend miteinander gefaltet sind,
und wobei das Adsorptionsfilterelement (3) mindestens einen als Wabenkörper ausgebildeten zumindest Kohlenwasserstoffe adsorbierenden Formkörper (3A - 3E) aufweist, und wobei der Dichtflansch (5) derart angeordnet ist, dass er das Adsorptionsfilterelement (3) an einer umlaufenden Außenwand (14) desselben seitlich umläuft.

2. Innenraumluftfiltermodul nach Anspruch 1, wobei der Dichtflansch (5) eine Dichtungsebene (DE) definiert, und der Dichtflansch (5) derart angeordnet ist, dass die Dichtungsebene (DE) durch das Innere des als Wabenkörper ausgebildeten Formkörpers (3A - 3E) verläuft.

3. Innenraumluftfiltermodul nach Anspruch 1 oder 2, wobei der Dichtflansch (5) eine Dichtungsebene (DE) definiert, welche das Innenraumluftfiltermodul (1) in eine erste und zweite Hälfte (OM, UM) trennt, wobei der Dichtflansch (5) derart angeordnet ist, dass ein Verhältnis zwischen einer Masse der ersten Hälfte (OM) des Innenraumluftfiltermoduls (1) und einer Masse der zweiten Hälfte (UM) des Innenraumluftfiltermoduls (1) zwischen 0,6 und 1,4, vorzugsweise zwischen 0,8 und 1,2 liegt.

4. Innenraumluftfiltermodul nach einem der Ansprüche 1 - 3, ferner mit einem Hilfsrahmen (7), welcher das Partikelfilterelement (2) und das Adsorptionsfilterelement (3) zumindest teilweise seitlich umschließt und miteinander verbindet, wobei der Hilfsrahmen (7) mit dem Rahmen (4) verbunden ist, insbesondere mit dem Rahmen (4) verklebt.

5. Innenraumluftfiltermodul nach einem der Ansprüche 1 - 4, ferner mit einer abströmseitig des Adsorptionsfilterelements (3) angeordneten Zwischenfilterlage (8).

6. Innenraumluftfiltermodul nach einem der Ansprüche 1 - 5, wobei das Partikelfilterelement (2) einen das Faltenpack umschließenden Rahmen umfasst, welcher auf Faltprofile des gefalteten Filtermediums (15) angebrachte Seitenbänder (12B) und an Endfalten des Faltenpacks angebrachte Kopfbänder (12A) umfasst.

7. Innenraumluftfiltermodul nach einem der Ansprüche 1 - 6, wobei eine der mehreren Lagen (2A, 2B) des Partikelfilterelements (2) ein aerosolabscheidendes Partikelfiltermedium (2A) der Filtrationsklasse H13 oder H14 nach DIN EN 1822-1 umfasst.

8. Innenraumluftfiltermodul nach einem der Ansprüche 1 - 7, wobei das Adsorptionsfilterelement (3) mehrere Formkörper (3A - 3E) umfasst, welche miteinander verbunden sind, insbesondere mittels einer aushärtbaren Vergussmasse.

9. Innenraumluftfiltermodul nach einem der Ansprüche 1 - 8, wobei der mindestens eine als Wabenkörper ausgebildete Formkörper (3A - 3E) zumindest teilweise aus einem Keramikmaterial, Aktivkohlematerial, lonenaustauschermaterial, Molekularsiebmaterial, Zeolithmaterial, metallorganischen Gerüstmaterial, und/oder Metallmaterial gefertigt ist.

10. Innenraumluftfiltermodul nach einem der Ansprüche 1 - 9, wobei das Partikelfilterelement (2), das Adsorptionsfilterelement (3), der als Wabenkörper ausgebildete Formkörper (3A - 3E) und/oder das Innenraumluftfiltermodul jeweils quaderförmig ausgebildet ist.

11. Innenraumluftfiltermodul nach einem der Ansprüche 1 - 10, ferner mit einer an den Dichtflansch (5) angebrachten Dichtung (6).

12. Innenraumluftfiltermodul nach einem der Ansprüche 1 - 11, wobei das Partikelfilterelement (2) und das Adsorptionsfilterelement (3) in dem erfindungsgemäßen Filtermodul (1) so angeordnet sind, dass sie seriell durchströmbar sind, wobei insbesondere das Partikelfilterelement (2) stromaufwärts des Adsorptionsfilterelements (3) angeordnet ist.

## Claims

1. Interior air filter module (1) with a particle filter element (2), an adsorption filter element (3), a frame (4) surrounding the particle filter element (2) and the adsorption filter element (3), which comprises a radially protruding sealing flange (5), wherein the particle filter element (2) comprises a pleated pack made of a plurality of layers of a zigzag-folded filter medium (15) and at least one layer (2B) features an aerosol-separating filter medium,
wherein the particle filter element (2) comprises a first layer (2A) on the upstream side and a second layer (2B) on the downstream side, which are folded together to form the pleated pack,
and wherein the adsorption filter element (3) features at least one molded part (3A-3E) formed as a honeycomb structure and adsorbing at least hydrocarbons, and wherein the sealing flange (5) is arranged such that it surrounds the adsorption filter element (3) laterally on a circumferential outer wall (14) thereof.

2. Interior air filter module according to claim 1, wherein the sealing flange (5) defines a sealing plane (DE), and the sealing flange (5) is arranged such that the sealing plane (DE) runs through the interior of the molded part (3A-3E) designed as a honeycomb structure.

3. Interior air filter module according to claim 1 or 2, wherein the sealing flange (5) defines a sealing plane (DE) which separates the interior air filter module (1) into a first and second half (OM, UM), wherein the sealing flange (5) is arranged such that a ratio between a mass of the first half (OM) of the interior air filter module (1) and a mass of the second half (UM) of the interior air filter module (1) is between 0.6 and 1.4, preferably between 0.8 and 1.2.

4. Interior air filter module according to one of the claims 1 to 3, further comprising a subframe (7) which at least partially encloses the particle filter element (2) and the adsorption filter element (3) laterally and connects them to each other, wherein the subframe (7) is connected to the frame (4), in particular glued to the frame (4).

5. Interior air filter module according to one of the claims 1 to 4, further comprising an intermediate filter layer (8) arranged on the downstream side of the adsorption filter element (3).

6. Interior air filter module according to one of the claims 1 to 5, wherein the particle filter element (2) comprises a frame enclosing the pleated pack, the frame comprising sidebands (12B) attached to folding profiles of the pleated filter medium (15) and headbands (12A) attached to end folds of the pleated pack.

7. Interior air filter module according to one of the claims 1 to 6, wherein one of the plurality of layers (2A, 2B) of the particle filter element (2) comprises an aerosol-separating particle filter medium (2A) of filtration class H13 or H14 according to DIN EN 1822-1.

8. Interior air filter module according to one of the claims 1 to 7, wherein the adsorption filter element (3) comprises a plurality of molded parts (3A-3E) connected to one another, in particular by means of a curable casting compound.

9. Interior air filter module according to one of the claims 1 to 8, wherein the at least one molded part (3A-3E) designed as a honeycomb structure is at least partially made of a ceramic material, activated carbon material, ion exchanger material, molecular sieve material, zeolite material, metalorganic framework material, and/or metal material.

10. Interior air filter module according to one of the claims 1 to 9, wherein the particle filter element (2), the adsorption filter element (3), the molded part (3A-3E) designed as a honeycomb structure, and/or the interior air filter module are each designed to be cuboid-shaped.

11. Interior air filter module according to one of the claims 1 to 10, further comprising a seal (6) attached to the sealing flange (5).

12. Interior air filter module according to one of the claims 1 to 11, wherein the particle filter element (2) and the adsorption filter element (3) are arranged in the filter module (1) according to the invention in such a way that they can be flowed through in series, wherein in particular the particle filter element (2) is arranged upstream of the adsorption filter element (3).

## Revendications

1. Module de filtre à air d'habitacle (1) avec un élément de filtre à particules (2), un élément filtrant d'adsorption (3), un cadre (4) entourant l'élément de filtre à particules (2) et l'élément filtrant d'adsorption (3), lequel comprend une bride d'étanchéité (5) saillant radialement, l'élément de filtre à particules (2) étant constitué d'un ensemble de plis formé de plusieurs couches d'un milieu filtrant (15) plié en accordéon et présentant au moins une couche (2B) d'un média filtrant séparant les aérosols,
l'élément de filtre à particules (2) comprenant, du côté amont, une première couche (2A) et, du côté aval, une deuxième couche (2B) qui sont pliées l'une contre l'autre pour former l'ensemble de plis,
et l'élément filtrant d'adsorption (3) présentant au moins un corps moulé (3A - 3E) en forme de gaufre adsorbant au moins les hydrocarbures, et la bride d'étanchéité (5) étant disposée de manière à entourer latéralement l'élément filtrant d'adsorption (3) au niveau d'une paroi externe périphérique (14) de celui-ci.

2. Module de filtre à air d'habitacle selon la revendication 1, dans lequel la bride d'étanchéité (5) définit un plan d'étanchéité (DE) et la bride d'étanchéité (5) est disposée de telle sorte que le plan d'étanchéité (DE) s'étend à travers l'intérieur du corps moulé (3A - 3E) conçu comme un corps en forme de gaufre.

3. Module de filtre à air d'habitacle selon la revendication 1 ou 2, dans lequel la bride d'étanchéité (5) définit un plan d'étanchéité (DE) qui sépare le module de filtre à air d'habitacle (1) en une première et une deuxième moitié (OM, UM), la bride d'étanchéité (5) étant disposée de telle sorte que le rapport entre la masse de la première moitié (OM) du module de filtre à air d'habitacle (1) et la masse de la deuxième moitié (UM) du module de filtre à air d'habitacle (1) se situe entre 0,6 et 1,4, de préférence entre 0,8 et 1,2.

4. Module de filtre à air d'habitacle selon l'une quelconque des revendications 1 à 3, comprenant en outre un cadre auxiliaire (7) qui entoure au moins partiellement latéralement l'élément de filtre à particules (2) et l'élément filtrant d'adsorption (3) et les relie entre eux, le cadre auxiliaire (7) étant relié au cadre (4), en particulier collé au cadre (4).

5. Module de filtre à air d'habitacle selon l'une quelconque des revendications 1 à 4, comprenant en outre une couche filtrante intermédiaire (8) disposée du côté sortie de l'élément filtrant d'adsorption (3).

6. Module de filtre à air d'habitacle selon l'une quelconque des revendications 1 à 5, l'élément de filtre à particules (2) comprenant un cadre entourant l'ensemble de plis, le cadre comprenant des bandes latérales (12B) fixées sur les profils de plis du milieu filtrant plissé (15) et des bandes frontales (12A) fixées sur les plis d'extrémité de l'ensemble de plis.

7. Module de filtre à air d'habitacle selon l'une quelconque des revendications 1 à 6, dans lequel l'une des multiples couches (2A, 2B) de l'élément de filtre à particules (2) comprend un milieu filtrant particulaire séparant les aérosols (2A) de classe de filtration H13 ou H14 selon la norme DIN EN 1822-1.

8. Module de filtre à air d'habitacle selon l'une quelconque des revendications 1 à 7, dans lequel l'élément filtrant d'adsorption (3) comprend plusieurs corps moulés (3A à 3E) qui sont reliés entre eux, en particulier au moyen d'une masse de scellement durcissable.

9. Module de filtre à air d'habitacle selon l'une quelconque des revendications 1 à 8, dans lequel au moins un corps moulé (3A à 3E) conçu comme un corps en forme de gaufre est fabriqué au moins en partie à partir d'un matériau céramique, d'un matériau à charbon actif, d'un matériau échangeur d'ions, d'un matériau à tamis moléculaire, d'un matériau zéolithique, d'un matériau à structure organométallique et/ou d'un matériau métallique.

10. Module de filtre à air d'habitacle selon l'une quelconque des revendications 1 à 9, dans lequel l'élément de filtre à particules (2), l'élément filtrant d'adsorption (3), le corps moulé (3A - 3E) conçu comme un corps en forme de gaufre et/ou le module de filtre à air d'habitacle sont chacun conçus sous forme parallélépipédique.

11. Module de filtre à air d'habitacle selon l'une quelconque des revendications 1 à 10, comprenant en outre un joint d'étanchéité (6) fixé à la bride d'étanchéité (5).

12. Module de filtre à air d'habitacle selon l'une quelconque des revendications 1 à 11, dans lequel l'élément de filtre à particules (2) et l'élément filtrant d'adsorption (3) sont disposés dans le module de filtration (1) selon l'invention de manière à pouvoir être parcourus en série, l'élément de filtre à particules (2) étant notamment disposé en amont de l'élément filtrant d'adsorption (3).
